# EUROPÄISCHE PATENTSCHRIFT

(11) **EP 3 077 912 B1**
(45) Veröffentlichungstag und Bekanntmachung des Hinweises auf die Patenterteilung: **08.08.2018**
(21) Anmeldenummer: 14783847.8
(22) Anmeldetag: 13.10.2014
(51) Int. Cl.: G06F 12/08, G06F 15/173

(54) **STEUERGERÄT FÜR EIN KRAFTFAHRZEUG**
CONTROL DEVICE FOR A MOTOR VEHICLE
DISPOSITIF DE COMMANDE POUR VÉHICULE AUTOMOBILE

(30) Priorität: 03.12.2013 DE 102013224702
(43) Veröffentlichungstag der Anmeldung: 12.10.2016
(73) Patentinhaber: Robert Bosch GmbH, 70442 Stuttgart (DE)
(72) Erfinder: BIEWER, Alexander, 54662 Speicher (DE); THOSS, Dieter, 71701 Schwieberdingen (DE); GLADIGAU, Jens, 70469 Stuttgart (DE); HAUBELT, Christian, 18198 Kritzmow (DE)
(86) Internationale Anmeldenummer: PCT/EP2014/071872
(87) Internationale Veröffentlichungsnummer: WO 2015/082109

(56) Entgegenhaltungen:
- WO-A1-2007/107457
- DE-A1-102009 029 642
- DE-A1-102012 207 215
- US-A1- 2003 204 682

## Beschreibung

Die vorliegende Erfindung betrifft ein Steuergerät für ein Kraftfahrzeug.

### Stand der Technik

Moderne Steuergeräte von Kraftfahrzeugen weisen zumeist einen Multicore-Prozessor auf. Multicore-Prozessoren umfassen dabei mehrere (wenigstens zwei) Prozessorkerne (Cores). Ein Prozessorkern bzw. Core umfasst dabei eine arithmetisch-logische Einheit (ALU), welche das eigentliche elektronische Rechenwerk zur Ausführung von Tasks, Programmen, Rechenbefehlen, etc. darstellt. Ein Prozessorkern umfasst weiterhin einen lokalen Speicher. Ein derartiger lokaler Speicher ist insbesondere als ein Registersatz aus einem oder mehreren Registern ausgebildet. Steuergeräte umfassen weiterhin einen globalen Speicher. Dieser globale Speicher kann beispielsweise Flash-, NOR-Flash oder RAM-Speicher umfassen. Auch Peripheriemodule, beispielsweise Sensoren, können zu diesem globalen Speicher gezählt werden.

In Steuergeräten von Kraftfahrzeugen werden permanent Prozesse durch die einzelnen Prozessorkerne ausgeführt. Zum Ausführen von Tasks bzw. Prozessen benötigen die Prozessorkerne insbesondere einen entsprechenden Programmcode und gegebenenfalls Eingabedaten. Derartige Programmcodes können beispielsweise in Flash- und/oder NOR-Flash-Speichern des globalen Speichers hinterlegt sein. Eingabedaten können beispielsweise erfasste Messdaten von Peripheriemodulen sein, beispielsweise eine Motordrehzahl, Temperaturen, Drücke, etc.

Um einen Task bzw. Prozess ausführen zu können, lädt ein Prozessorkern zunächst die entsprechenden Daten, insbesondere Programmcode und benötigte Eingabedaten, in seinen lokalen Speicher, da ein Prozessorkern mit deutlich geringerer (und vorhersagbarer) Zugriffszeit auf seinen lokalen Speicher als auf den globalen Speicher zugreifen kann. Auf seinen lokalen Speicher kann ein Prozessorkern zumeist innerhalb von einem Takt zugreifen, wohingegen Zugriffe auf den globalen Speicher zumeist zwischen drei und zehn Takte benötigen.

Steuergerät und darauf ablaufende Prozesse müssen bestimmten Sicherheitsanforderungen genügen, die beispielsweise in der ISO-Norm ISO26262 beschrieben werden. Unter anderem muss ein Steuergerät echtzeitfähig sein. Es muss also garantiert werden, dass ein Prozess in einer vorgegebenen maximalen Ausführungszeit erfolgreich ausgeführt wird. Diese Ausführungszeit wird jedoch maßgeblich von den lokalen Speichern bestimmt. Je nachdem, welcher Programmcode zuvor ausgeführt wurde oder ob beispielsweise Interrupts aufgetreten sind, befinden sich mehr oder weniger passende Daten in dem lokalen Speicher. Eine maximale Ausführungszeit lässt sich deshalb nur schwer bestimmen, weshalb große Sicherheitsaufschläge nötig sind. Durch diesen eingeplanten "Sicherheitspuffer" wird deshalb die nutzbare Rechenleistung jedes Prozessorkerns verringert.

Greifen zwei Prozessorkerne zeitgleich auf dieselben Ressourcen zu, insbesondere auf den globalen Speicher, kann es zu einer Zugriffskollision kommen. Zwar treten derartige Zugriffskollisionen selten auf und verringern die mittlere Rechenleistung des Multicore-Prozessors kaum. Um eine Echtzeitfähigkeit gewährleisten zu können, müssen diese Zugriffskollision jedoch für eine maximale Ausführungsdauer ("worst case") berücksichtigt werden. Jedoch ist dies oftmals nur sehr schwierig oder gar überhaupt nicht möglich. Stattdessen können Sicherheitsaufschläge weiter erhöht werden, was sich wiederum negativ auf die nutzbare Rechenleistung auswirkt.

Es ist daher wünschenswert, ein verbessertes Steuergerät für ein Kraftfahrzeug mit einem Multicore-Prozessor bereitzustellen. Insbesondere soll dabei auf einfache Weise eine Echtzeitfähigkeit des Steuergeräts gewährleistet werden und die nutzbare Rechenleistung erhöht werden. EP1209573 offenbart ein Steuergerät, das sich für ein Kraftfahrzeug eignet, gemäß dem Oberbegriff des Anspruchs 1.

### Offenbarung der Erfindung

Erfindungsgemäß wird ein Steuergerät für ein Kraftfahrzeug mit den Merkmalen des Patentanspruchs 1 vorgeschlagen. Vorteilhafte Ausgestaltungen sind Gegenstand der Unteransprüche sowie der nachfolgenden Beschreibung.

Das Steuergerät umfasst dabei wenigstens einen Multicore-Prozessor oder wenigstens zwei Singlecore- oder Multicore-Prozessoren. Das Steuergerät umfasst daher wenigstens zwei Prozessorkerne. Erfindungsgemäß kann jeder Prozessorkern lediglich auf seinen eigenen lokalen Speicher zugreifen. Im Gegensatz zu herkömmlichen Prozessoren können die einzelnen Prozessorkerne weder auf lokale Speicher der übrigen Prozessorkerne, noch auf den globalen Speicher zugreifen.

Erfindungsgemäß ist es stattdessen lediglich einer Koordinationseinheit möglich, auf die lokalen Speicher jedes einzelnen Prozessorkerns und auf den globalen Speicher zuzugreifen. Die Koordinationseinheit kann dabei Daten aus dem globalen Speicher des Steuergeräts einlesen und kann Daten in die lokalen Speicher der einzelnen Prozessorkerne schreiben. Andererseits kann die Koordinationseinheit auch Daten aus den lokalen Speichern der einzelnen Prozessorkerne einlesen und Daten in den globalen Speicher des Steuergeräts und/oder in die lokalen Speicher der übrigen Prozessorkerne schreiben.

### Vorteile der Erfindung

Jeder Prozessorkern kann lediglich auf seinen eigenen lokalen Speicher zugreifen. Im Gegensatz zu herkömmlichen Steuergeräten ist es den einzelnen Prozessorkernen nicht mehr möglich, auf den globalen Speicher oder auf einen lokalen Speicher der übrigen Prozessorkerne zuzugreifen. Erfindungsgemäß übernimmt bzw. koordiniert die Koordinationseinheit einen Datenaustausch zwischen den lokalen Speichern der einzelnen Prozessorkerne und dem globalen Speicher, sowie einen Datenaustausch zwischen den lokalen Speichern der einzelnen Prozessorkerne untereinander. Somit kann verhindert werden, dass es zu Zugriffskollisionen kommt. Erfindungsgemäß kann vermieden werden, dass unterschiedliche Prozessorkerne gleichzeitig auf den globalen Speicher bzw. gleichzeitig auf dieselben Daten des globalen Speichers zugreifen.

Weiterhin können die einzelnen Prozessorkerne entlastet werden, da sich die Prozessorkerne nicht mehr um den Transfer und den Austausch von Daten kümmern müssen. Zeit und Rechenleistung, welche die Prozessorkerne in herkömmlichen Steuergeräten für Datenaustausch aufwenden müssen, kann eingespart und für die eigentliche Funktionalität der Prozessorkerne genutzt werden. Der Austausch von Daten erfolgt insbesondere ausschließliche über die Koordinationseinheit, unabhängig von den einzelnen Prozessorkernen. Somit wird insbesondere eine Trennung von Kommunikation bzw. Datenaustausch und Ausführung von Tasks bzw. Prozessen realisiert. Somit können spezielle Programmierungen eingespart werden, welche den entsprechenden Prozessorkern anweisen, einen Datenaustausch bzw. Speichertransfer durchzuführen. Dadurch werden insbesondere Software bzw. Programmcodes, welche auf den einzelnen Prozessorkernen abgearbeitet bzw. ausgeführt werden, vereinfacht. Somit wird insbesondere eine Ausführungszeit, welche zum Ausführen von Tasks bzw. Prozessen auf einem Prozessorkern benötigt wird, verkürzt. Die Rechenleistung der Prozessorkerne kann somit erhöht werden.

Der globale Speicher des Steuergeräts kann beispielsweise ein Flash-Speicher oder ein RAM-Speicher ausgebildet sein. Auch die lokalen Speicher der Prozessorkerne können insbesondere jeweils als ein Flash-Speicher, ein NOR-Flash-Speicher oder ein RAM-Speicher ausgebildet sein. Der globale Speicher kann auch Peripheriemodule umfassen. Derartige Peripheriemodule sind insbesondere Sensoren, Aktoren, Analog-Digital-Wandler, PWM-Generatoren und/oder Timer. Derartige Peripheriemodule stellen insbesondere Daten bereit, welche die Prozessorkerne insbesondere zum Ausführen ihrer Funktionalität bzw. eines Tasks benötigen. Daher sollen mit dem Begriff "globaler Speicher" auch derartige Peripheriemodule umfasst sein.

Die Prozessorkerne können dabei jeweils unterschiedlich ausgestaltet sein. Beispielsweise können die Prozessorkerne jeweils als unterschiedlich leistungsfähige Universal-Cores (16, 32, 64 Bit, mit oder ohne Float-Einheit, etc.) oder spezielle Cores (DSP, Bildverarbeitung, FFT, Mustererkennung, etc.) ausgebildet sein.

Durch die Erfindung wird es ermöglicht, dass ein Prozessorkern immer sehr schnell auf Daten zugreifen kann, da diese im lokalen Speicher vorliegen. Dieser Zugriff ist vergleichbar mit einem Zugriff auf einen Cache. In nicht eingebetteten Systemen (z.B. in PCs) werden anstatt lokalem Speicher oft Caches verwendet. Lokale Speicher hingegen werden zumeist nur in Steuergeräten und deren Multicore-Prozessoren in eingebetteten Systemen verwendet. Ein Cache hat den Vorteil, dass er einen Datenzugriff jeder beliebigen Software beschleunigt, ohne dass diese Software speziell angepasst werden muss. Der Nachteil eines Caches liegt in der Unvorhersagbarkeit seines Inhalts und damit der Zugriffszeit auf Daten durch einen Prozessorkern: Zugriffe auf Daten können sehr schnell sein, wenn diese Daten bereits im Cache vorliegen (cache hit). Zugriffe auf Daten können jedoch auch eine längere Zeit in Anspruch nehmen, wenn diese Daten zuerst in den Cache geladen werden müssen (cache miss).. In herkömmlichen Steuergeräten wird deshalb oft zu Gunsten der Vorhersagbarkeit auf den Einsatz von Cache verzichtet. Durch die Koordinationseinheit kann schneller Datenzugriff (ähnlich einem Cache) jedoch ermöglicht werden. Die Koordinationseinheit erzeugt dabei insbesondere gleichzeitig entsprechende Adress- und Steuersignale für den globalen und den lokalen Speicher. Somit können Daten direkt von lokalem zu globalem Speicher fließen (und vice versa). Dies wird insbesondere dadurch ermöglicht, dass die Koordinationseinheit (analog zu einem Cache-Controller) insbesondere zwischen Speichern transferiert.

Durch die Erfindung können somit Daten zwischen globalem und lokalem Speicher (bzw. zwischen lokalem und globalem Speicher) sehr viel schneller ausgetauscht werden, da die Daten (analog wie bei einem Cache) direkt, ohne Zwischenspeicherung transferiert werden. Dieser Datentransfer wird dabei insbesondere nicht mit einer (vergleichsweise) kleinen Datenwortlänge eines Prozessorkerns (von üblicherweise 32 Bit) durchgeführt, sondern insbesondere mit einer großen Datenwortlänge eines Cache bzw. eines Cache-Controllers (von üblicherweise zwischen 64 und 256 Bit). Dadurch kann ein Datentransfer um bis zu einer Größenordnung beschleunigt werden.

Darüber hinaus können durch die Erfindung die Nachteile, welche ein Cache üblicherweise mit sich bringt, überwunden werden. Eine Implementierung der Koordinationseinheit in ein Steuergerät ist wesentlich weniger aufwendig und kostengünstiger als die Implementierung eines Cache. Wo hingegen ein Cache Daten erst bei einem sogenannten Cache-Miss (alle Caches werden ohne Erfolg durchsucht, d.h. entsprechende Daten sind in keinem Cache vorhanden) lädt und ein Zeitverhalten des Cache schwer vorhersagbar ist, lädt die Koordinationseinheit Daten effektiv und vorausschauend in den globalen bzw. die lokalen Speicher. Durch die Koordinationseinheit wird ein Zeitverhalten hingegen sehr viel leichter vorhersagbar und eine Echtzeitfähigkeit des Steuergeräts bzw. des Multicore-Prozessors kann gewährleistet werden.

Jeder Prozessorkern kann somit auf seinen lokalen Speicher genauso bzw. annähernd so schnell zugreifen, wie auf einen Cache. Weiterhin werden Wartezeiten vermieden, die bei herkömmlichen Steuergeräten beim Zugriff auf globale RAM- und Flash-Speicher auftreten können. Zugriffskollisionen und damit bedingte Wartezeiten werden ebenfalls vermieden. Somit werden unvorhersehbaren Verzögerungen (insbesondere durch gleichzeitigen Zugriff auf geteilte Ressourcen, also auf den globalen Speicher) vermieden. Somit kann eine maximale Ausführungsdauer von Tasks bzw. Prozessen bzw. Software präzise bestimmt werden. Die volle Rechenleistung der einzelnen Prozessorkerne kann zum Ausführen dieser Tasks bzw. Prozesse bzw. Software aufgewendet werden. Weiterhin kann somit eine bestimmte Ausführungsdauer garantiert und eine Echtzeitfähigkeit gewährleistet werden. Des Weiteren kann die garantierte Ausführungszeit verkürzt werden. Sicherheitsaufschläge werden vermieden.

Da jeder Prozessorkern nur auf seinen eigenen lokalen Speicher zugreifen kann, sind die einzelnen Prozessorkerne (vollkommen) eingekapselt. Dadurch können die einzelnen Prozessorkerne das restliche System bzw. die restlichen Prozessorkerne nicht stören. Somit kann eine weitere Sicherheitsanforderung erfüllt werden, die gemäß der ISO26262 gefordert wird, die sogenannte "Freedom of Interference". Demgemäß wird gewährleistet, dass sich SoftwareKomponenten nicht gegenseitig stören bzw. dass die Ausführung einer Task (auf einem Prozessorkern) nicht die Ausführung einer anderen Task (auf einem anderen Prozessorkern) stört. Durch die Koordinationseinheit ist eine derartige "Freedom of Interference" konzeptionell gegeben.

Insbesondere führt die Koordinationseinheit eine Datenkonvertierung bzw. eine Umformung der Daten durch. Insbesondere kann die Koordinationseinheit dabei Daten im Little Endian Format einlesen und im Big Endian Format schreiben (und umgekehrt). Weiter insbesondere kann die Koordinationseinheit Daten als Gleitkommawerte (double, float) einlesen und Daten als ganzzahlige Werte (integer) schreiben (und umgekehrt). Eine Datenkonvertierung kann dabei in der Koordinationseinheit als ein Parameter des Datentransfers (also des Lesens und Schreibens der Daten) oder eine spezielle Datentransferoperation realisiert werden.

Die Koordinationseinheit kann insbesondere über eine Kommunikationsinfrastruktur des Steuergeräts auf den globalen Speicher des Steuergeräts zugreifen. Insbesondere greift die Koordinationseinheit über getrennte oder zusammengefasste Busse auf den globalen Speicher zu. Weiterhin greift die Koordinationseinheit insbesondere über einen einfachen Bus auf die lokalen Speicher der Prozessorkerne zu. Insbesondere ist dabei kein Crossbar bzw. Koppelfeld nötig. Dieser Bus hat dabei insbesondere einen hohen Durchsatz. Da Daten durch die Koordinationseinheit insbesondere in großen Blöcken stets in eine Richtung übertragen werden, darf der Bus insbesondere eine hohe Latenz aufweisen. Dadurch kann die Implementierung erheblich vereinfacht werden. Um Sicherheitsanforderungen zu genügen und Fehler beim Übertragen und Speichern von Daten durch die Koordinationseinheit zu erkennen und gegebenenfalls zu korrigieren, können diese Busse sowie der globale Speicher und/oder die lokalen Speicher insbesondere mittels Fehlerkorrekturverfahren, insbesondere mittels eines Error Correcting Code (ECC), gesichert werden.

Vorzugsweise erfolgt das Lesen und Schreiben von Daten durch die Koordinationseinheit anwendungsspezifisch, insbesondere nach einem bestimmten Ablaufplan. Der Koordinationseinheit ist dabei ein bestimmter Ablaufplan bekannt, nach welchem die einzelnen Prozessorkerne bestimmte Tasks ausführen bzw. Prozesse abarbeiten. Durch diesen Ablaufplan ist der Koordinationseinheit bekannt, zu welchem Zeitpunkt welcher Prozessorkern welche Daten benötigt, d.h. zu welchem Zeitpunkt welche Daten in den lokalen Speicher des jeweiligen Prozessorkerns geschrieben sein müssen. Andererseits ist der Koordinationseinheit dadurch bekannt, zu welchem Zeitpunkt welcher Prozessorkern Daten bereitstellt, d.h. zu welchem Zeitpunkt Daten aus dem lokalen Speicher des jeweiligen Prozessorkerns eingelesen werden können. Für diesen Ablaufplan werden insbesondere Perioden bestimmter Tasks bzw. bestimmter Prozesse berücksichtigt. Diese Perioden sind dabei Zeitintervalle, in welchen die Tasks bzw. Prozesse durch Prozessorkerne ausgeführt werden. Die Perioden beschreiben somit Ausführungszeitpunkte der einzelnen Tasks bzw. Prozesse. Die Tasks bzw. Prozesse müssen jedoch nicht zwangsläufig innerhalb fester Perioden ausgeführt werden. Alternativ kann der Koordinationseinheit auch ein anderes zeitlich vorhersehbares Ausführen von Tasks bzw. Prozessen bekannt sein.

Die Koordinationseinheit führt das Lesen und Schreiben von Daten somit bevorzugt zeitgetrieben durch, weiter insbesondere entsprechend den Perioden bzw. den Ausführungszeitpunkten einzelner Tasks bzw. einzelner Prozesse. Somit führt die Koordinationseinheit das Lesen und Schreiben von Daten unabhängig von den einzelnen Prozessorkernen durch. Beispielsweise kann die Koordinationseinheit in regelmäßigen Zeitintervallen, vor der bekannten periodischen Ausführung eines bestimmten Tasks bzw. Prozesses, Daten von dem globalen Speicher in den lokalen Speicher eines Prozessorkerns schreiben. Damit das zeitgetriebene Lesen und Schreiben von Daten mit den Perioden der ausgeführten Tasks bzw. Prozesse übereinstimmt, besitzen die Koordinationseinheit und die Prozessorkerne insbesondere eine gemeinsame Zeitbasis. Diese gemeinsame Zeitbasis kann beispielsweise über einen gemeinsamen Takt (Clock) oder einen geeigneten Synchronisationsmechanismus realisiert werden. Die Koordinationseinheit kann jedoch auch einen eigenen Takt aufweisen.

In einer vorteilhaften Ausgestaltung liest die Koordinationseinheit einen Programmcode eines auszuführende Tasks und/oder Eingangsdaten, welche für einen auszuführenden Tasks benötigt werden, aus dem globalen Speicher ein. Die Koordinationseinheit schreibt diesen eingelesenen Programmcode bzw. diese eingelesenen Eingangsdaten als Daten in den lokalen Speicher eines Prozessorkerns. Ein Task ist dabei ein Stück Software. Zum Ausführen bzw. Abarbeiten eines Tasks sind Eingangsdaten erforderlich. Eingangsdaten sind dabei insbesondere erfasste Messdaten von Peripheriemodulen, insbesondere von Sensoren, beispielsweise eine Motordrehzahl, Temperaturen und/oder Drücke.

Im Gegensatz zu herkömmlichen Steuergeräten muss ein Prozessorkern den Programmcode und die Eingangsdaten nicht selbsttätig aus dem globalen Speicher in seinen lokalen Speicher laden, wenn dieser Prozessorkern einen entsprechenden Task ausführen soll. Stattdessen werden dem Prozessorkern die entsprechende Programmcode/Eingangsdaten von außen durch die Koordinationseinheit zugeführt.

Die Koordinationseinheit kann dabei einen Programmcode blockweise in die lokalen Speicher schreiben oder auch die Programmcodes mehrerer Tasks gleichzeitig. Insbesondere kann die Koordinationseinheit die Programmcodes für die nächsten von dem entsprechenden Prozessorkern auszuführenden Task in den entsprechenden lokalen Speicher schreiben. Die Koordinationseinheit kann auch persistente Eingangsdaten sporadisch in die lokalen Speicher schreiben, beispielsweise wenn stets gewechselt wird, welcher Prozessorkern welche Task ausführen soll.

Alternativ kann der Programmcode des auszuführenden Tasks bereits in dem lokalen Speicher eines Prozessorkerns gespeichert sein. Beispielsweise kann dieser Programmcode im Zuge einer Initialisierungsphase des Steuergeräts in den lokalen Speicher geschrieben werden. Es ist auch möglich, dass der Programmcode noch aus einer vorangegangenen Ausführung des Tasks in dem lokalen Speicher gespeichert ist. Dabei ist es auch möglich, dass der Programmcode noch in einem lokalen Flash-Speicher oder einem (nicht flüchtigem) RAM-Speicher des Prozessorkerns gespeichert ist. In diesen Fällen muss die Koordinationseinheit den Programmcode nicht erneut aus dem globalen Speicher einlesen und in den lokalen Speicher schreiben, sondern lediglich den Prozessorkern anweisen, den Task auszuführen.

Ist der entsprechende Programmcode bereits in dem lokalen Speicher des Prozessorkerns gespeichert, kann die Koordinationseinheit auch lediglich die Eingangsdaten in den lokalen Speicher speichern. Die Koordinationseinheit kann die Eingangsdaten dabei beispielsweise aus einem globalen Flash-Speicher oder einem globalen RAM-Speicher des Steuergeräts einlesen oder direkt aus einzelnen Peripheriemodulen, insbesondere aus einzelnen Sensoren.

In einer weiteren bevorzugten Ausgestaltung liest die Koordinationseinheit Ausgabedaten, die ein Prozessorkern nach Ausführen eines Tasks in dessen lokalen Speicher speichert, aus diesem lokalen Speicher ein. Die Koordinationseinheit schreibt diese eingelesenen Ausgabedaten als Daten in den globalen Speicher und/oder als Daten in den lokalen Speicher eines der übrigen Prozessorkerne. Durch Ausführen des Tasks bestimmt der Prozessorkern die entsprechenden Ausgabedaten. Ausgangsdaten können beispielsweise Einspritzzeiten und/oder Einspritzmengen sein.

Die Ausgabedaten eines Prozessorkerns können wiederum als Eingangsdaten eines anderen Prozessorkerns dienen bzw. von einem anderen Prozessorkern weiterverarbeitet werden. In diesem Fall schreibt die Koordinationseinheit diese Ausgabedaten in den lokalen Speicher des entsprechenden Prozessorkerns.

Im Gegensatz zu herkömmlichen Steuergeräten schreiben die einzelnen Prozessorkerne Ausgabedaten während bzw. nach Ausführen eines Tasks nicht selbsttätig in den globalen Speicher bzw. in den lokalen Speicher eines anderen Prozessorkerns. Auch ist es den Prozessorkernen im Gegensatz zu herkömmlichen Steuergeräten nicht erlaubt, Peripheriemodule, beispielsweise Aktoren, mittels Ausgabedaten in Form von Steuersignalen direkt anzusteuern. Stattdessen werden die entsprechende Ausgabedaten von außen durch die Koordinationseinheit abgeholt.

Die Koordinationseinheit kann die Ausgabedaten einlesen, sobald ein Prozessorkern einen Task erfolgreich ausgeführt hat oder auch bereits während der Task noch ausgeführt wird, die Ausgabedaten aber bereits in den lokalen Speicher geschrieben wurden. Die Koordinationseinheit kann beispielsweise auch die Ausgabedaten mehrere Tasks blockweise einlesen, nachdem diese Tasks ausgeführt wurden. Auch ein blockweises Einlesen der Ausgabedaten eines Tasks, der mehrmals ausgeführt wurde, ist denkbar.

Das Ende des Ausführens eines Tasks durch einen Prozessorkern kann beispielsweise durch einen Zeitfortschritt abgeschätzt bzw. vorhergesagt werden. Der Prozessorkern kann das Ende des Ausführens der Task auch an die Koordinationseinheit signalisieren, beispielsweise mit einem Interrupt oder durch Setzen eines Datums in seinem lokalen Speicher.

Die Ausgabedaten können insbesondere Ansteuersignale sein, um Peripheriemodule anzusteuern oder Informationen enthalten, wie Peripheriemodule anzusteuern sind. In diesem Fall steuert die Koordinationseinheit die Peripheriemodule entsprechend diesen Ansteuersignalen an.

Vorzugsweise weist die Koordinationseinheit einzelnen Prozessorkernen auszuführende Tasks zu und/oder weist einzelne Prozessorkerne an, bestimmte Tasks auszuführen. Die Koordinationseinheit koordiniert somit insbesondere, welche Tasks von welchen Prozessorkernen ausgeführt werden. Insbesondere koordiniert die Koordinationseinheit die einzelnen Tasks dabei nach dem oben beschriebenen Ablaufplan. Die Koordinationseinheit teilt dabei insbesondere den einzelnen Prozessorkernen eine entsprechende Startadresse des entsprechenden Tasks mit. Weiter insbesondere signalisiert die Koordinationseinheit den einzelnen Prozessorkernen, wann diese mit dem Ausführen der einzelnen Tasks beginnen sollen. Dies kann beispielsweise durch einen Interrupt an den entsprechenden Prozessorkern oder durch Setzen eines Timers in dem Prozessorkern realisiert werden. Die Koordinationseinheit kann den entsprechenden Prozessorkern auch anweisen, einen neuen Task unmittelbar nach erfolgreichem Ausführen des aktuellen Tasks zu starten.

Insbesondere weist die Koordinationseinheit die auszuführenden Tasks derart den einzelnen Prozessorkernen zu, dass Tasks bzw. entsprechende Softwarekomponenten aus unterschiedlichen Quellen auf unterschiedlichen Prozessorkernen ausgeführt werden. Dabei sind für jede Softwarekomponente entsprechende Eingangsdaten und Ausgabedaten spezifiziert, damit die Koordinationseinheit die Eingangsdaten korrekt in dem lokalen Speicher des jeweiligen Prozessorkerns speichern und die Ausgabedaten entsprechend einlesen kann. Die Koordinationseinheit verfügt dabei insbesondere über Kenntnisse bezüglich einer Ausführungsdauer der einzelnen Tasks bzw. Softwarekomponenten. Die Softwarekomponenten können in einer zweckmäßigen Programmiersprache unter Verwendung einer beliebigen Toolkette entstanden sein. Die Softwarekomponente liegt insbesondere als fertiger Programmcode bzw. Objektcode vor. Dieser Programmcode muss dabei nicht relokatibel (anpassbar auf bestimmte Speicheradressen) sein, da jeder Prozessorkern seinen eigenen lokalen Speicher und somit seinen eigenen Adressraum aufweist.

Da die Koordinationseinheit Daten schnell konvertieren bzw. umformen kann, können die Daten insbesondere unterschiedlich kodiert sein. Somit können insbesondere modernere Softwarekomponenten, welche Float benutzen, mit älteren Softwarekomponenten, welche Integer benutzen, zusammenarbeiten. Die Koordinationseinheit führt dabei eine nötige Datenkonvertierung und somit anschaulich eine "Übersetzung" einzelner Daten durch. Somit wird es ermöglicht, unterschiedlich kodierte Softwarekomponente auf eine modernere Struktur zu migrieren und modernere Programmiersprachen und Toolketten zu nutzen. Alternativ können zweckmäßigerweise auch unterschiedliche Strukturen dauerhaft parallel benutzt werden.

Bevorzugt weist die Koordinationseinheit mehrere Prozessorkerne an, einen bestimmten Task auszuführen. Die Koordinationseinheit vergleicht anschließend die einzelnen Ausgabedaten dieser Prozessorkerne miteinander. Alternativ oder zusätzliche weist die Koordinationseinheit einen Prozessorkern an, einen bestimmten Task mehrmals auszuführen. Auch in diesem Fall vergleicht die Koordinationseinheit die einzelnen Ausgabedaten dieses mehrmaligen Ausführens des Prozessorkerns miteinander. Die Koordinationseinheit kann auch mittels einer Mehrheitsentscheidung diese Ausgabedaten miteinander vergleichen. Dieses redundante Ausführen von Tasks ist insbesondere bei hohen Sicherheitsanforderungen zweckmäßig.

Vorzugsweise steuert die Koordinationseinheit die einzelnen Prozessorkerne an. Im Zuge dessen kann die Koordinationseinheit die einzelnen Prozessorkerne unterbrechen, zurücksetzen, außer Betrieb nehmen, testen, in einen Stromsparmodus versetzen und/oder eine Taktfrequenz der einzelnen Prozessorkerne ändern. Die Koordinationseinheit kann somit einen jeden Prozessorkern zweckmäßig ansteuern, ohne dabei die restlichen Prozessorkerne zu beeinflussen bzw. zu stören. Insbesondere kann die Koordinationseinheit in regelmäßigen Zeitintervallen die einzelnen Prozessorkerne testen. "Zweifelhafte" Prozessorkerne, die eventuell einen Defekt aufweisen, können durch die Koordinationseinheit außer Betrieb genommen werden. In diesem Fall kann die Koordinationseinheit Tasks, welche diesem außer Betrieb genommenen Prozessorkern zugewiesen sind, anderen Prozessorkernen zuweisen. Insbesondere können diese Tasks dabei einem freigehaltenen Reserve-Prozessorkern zugewiesen und von diesem ausgeführt werden. Die Koordinationseinheit kann weiterhin auf dem außer Betrieb genommenen Prozessorkern einen Selbsttest (BIST) laufen lassen.

Bevorzugt kann die Koordinationseinheit bei den einzelnen Prozessorkernen auch einen oder verschiedene Interrupts auslösen. Damit können zum Beispiel Verzögerungen oder Speicherzugriffsfehler durch die Koordinationseinheit angezeigt werden. Ein Interrupt kann auch für einen Ablaufplan genutzt werden: Sobald das Schreiben von Daten in den lokalen Speicher eines Prozessorkerns abgeschlossen ist, kann die Koordinationseinheit durch einen Interrupt den Prozessorkern anweisen, den entsprechenden Task auszuführen. Einem Datentransfer, also dem Lesen und Schreiben der Daten, kann insbesondere eine maximale Dauer in Takten zugewiesen sein. Ist der Datentransfer innerhalb dieser Zeit nicht abgeschlossen, löst die Koordinationseinheit bei dem entsprechenden Prozessorkern einen Interrupt aus. Darüber hinaus kann einer Datentransferoperation insbesondere eine minimale Dauer in Takten zugewiesen sein. Wird der Datentransfer in einer Zeit abgeschlossen, welche kürzer als diese minimale Dauer ist, werden die restlichen Takte gewartet. Weiterhin ermöglicht die Koordinationseinheit insbesondere eine Modulo-Warteoperation. Damit kann beispielsweise bei variablen Dauern von Datentransfers auf eine bestimmte Periode synchronisiert werden. Die Koordinationseinheit kann des Weiteren auch eine Absolutzeit-Warteoperation enthalten, wodurch eine bestimmte Anzahl an Takten gewartet wird.

Bevorzugt sind die einzelnen lokalen Speicher der Prozessorkerne jeweils in unterschiedliche Speicherbänke unterteilt. Die Koordinationseinheit steuert bzw. legt fest bzw. stellt ein, auf welche Speicherbänke der jeweilige Prozessorkern zugreifen darf. Die Koordinationseinheit kann somit jeder Zeit auf diejenigen Speicherbänke eines Prozessorkerns zugreifen, auf welcher der Prozessorkern nicht zugreifen darf, ohne dabei die Arbeit des Prozessorkerns zu beeinflussen. Somit bleibt die Ausführungszeit des Prozessorkerns vorhersagbar. Während der Prozessorkern auf denjenigen Speicherbänken, auf welche er zugreifen darf, arbeitet und den Task ausführt, kann die Koordinationseinheit auf den restlichen Speicherbänken bereits den nächsten Task vorbereiten und insbesondere in diese restlichen Speicherbänken bereits Programmcode und/oder Eingabedaten von Tasks speichern, welche der entsprechende Prozessorkern als nächstes ausführen soll. Somit ist kein aufwendiger Dual-Ported-RAM nötig. Insbesondere weist jeder Prozessorkern zumindest vier Speicherbänke auf. Anzahl und Größe der Speicherbänke kann jedoch auch für die einzelnen Prozessorkerne unterschiedlich gewählt werden, je nach Anwendungsgebiet der einzelnen Prozessorkerne.

In einer bevorzugten Ausgestaltung der Erfindung ist die Koordinationseinheit als ein Teil eines Prozessorkerns ausgebildet. Dabei können insbesondere mehrere Prozessorkerne jeweils eine Koordinationseinheit aufweisen. Weiter insbesondere weist jeder Prozessorkern eine eigene, individuelle Koordinationseinheit auf. Diese einzelnen Koordinationseinheiten koordinieren jeweils das Lesen und Schreiben von Daten der jeweiligen zugeordneten Prozessorkerne. Die einzelnen Koordinationseinheiten stehen untereinander in Verbindung und können sich gegenseitig koordinieren, damit verhindert wird, dass mehrere Koordinationseinheiten gleichzeitig auf dieselben Daten zugreifen und somit Zugriffskollisionen verhindert werden.

Alternativ oder zusätzlich ist die Koordinationseinheit bevorzugt als ein separates Bauteil bzw. Hardwareelement ausgebildet. Insbesondere kann die Koordinationseinheit als ein Controller oder auch als ein eigener Prozessorkern ausgebildet sein. Eine Ausgestaltung als ein Controller bietet sich insbesondere in einem Bussystem mit Mastern und Slaves an. Dabei können auch mehrere dieser Koordinationseinheiten vorhanden sein. Eine derartige Koordinationseinheit gewährleistet dabei insbesondere höchste Datenlese- und Datenschreibgeschwindigkeit, höchste Sicherheit und höchste Verfügbarkeit.

Eine derartige als Hardwareelement ausgebildete Koordinationseinheit weist insbesondere einen Master-Port zum Lesen und Schreiben der Daten auf und weiter insbesondere einen eigenen lokalen Speicher. Weiterhin weist die Koordinationseinheit insbesondere eine oder mehrere (Master-)Schnittstellen zu den einzelnen Prozessorkernen auf, insbesondere mit jeweils einen oder mehreren Slave-Ports pro Prozessorkern. Insbesondere kann die Koordinationseinheit auch einen Zähler aufweisen, der eine Anzahl an Takten seit dem Start der Koordinationseinheit erfasst.

Weiterhin weist die Koordinationseinheit insbesondere eine zweckmäßige Logik bzw. eine logische Einheit, insbesondere eine arithmetisch-logische Einheit (ALU) auf. Mittels dieser Logik kann die Koordinationseinheit eine zweckmäßige Programmierung ausführen. Unter dem Begriff "Koordinationseinheit" sei insbesondere auch diese Programmierung bzw. allgemein eine Software umfasst, welche auf einem entsprechenden Hardwareelement ausgeführt wird. Der Begriff "Koordinationseinheit" soll somit sowohl ein entsprechendes Hardwareelement als auch eine entsprechende ausgeführte Software umfassen.

Diese Programmierung ist dabei insbesondere in dem lokalen Speicher der Koordinationseinheit gespeichert. Alternativ kann die Programmierung auch in dem globalen Speicher des Steuergeräts oder in einem lokalen Speicher eines Prozessorkerns gespeichert sein. Die Programmierung wird insbesondere sequentiell von der Koordinationseinheit abgearbeitet. Die Programmierung dient insbesondere zu einer Konfiguration der Koordinationseinheit.

Analog zu den Prozessorkernen arbeitet die Koordinationseinheit mit einem Takt. Zu jedem Takt kann die Koordinationseinheit insbesondere eine Operation bearbeiten oder schlafen. Der Takt kann dabei der Prozessortakt sein, aber auch asynchron dazu, etwa ein Takt eines Kommunikationsmediums. Die Programmierung der Koordinationseinheit kann insbesondere eine Liste aus Datentransferoperationen, Warteoperationen und Sprungoperationen in beliebiger Reihenfolge sein. Eine Datentransferoperation enthält dabei insbesondere eine Leseadresse, von der die Daten gelesen werden und eine Speicheradresse, in welcher die Daten geschrieben werden sollen. Weiterhin enthält eine Datentransferoperation eine Anzahl an Datenwörtern, die transferiert werden sollen sowie optional Anweisungen zur Umkodierung von Daten. Eine Warteoperation enthält insbesondere einen Zahlenwert, welcher angibt, wie viele Takte die Koordinationseinheit schlafen soll. Ein spezieller Wert (etwa Null) bedeutet dabei insbesondere "schlafe bis auf weiteres". Eine Sprungoperation enthält insbesondere eine Speicheradresse, welche angibt, wo die Operation liegt, die als nächstes von der Koordinationseinheit abgearbeitet werden soll.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

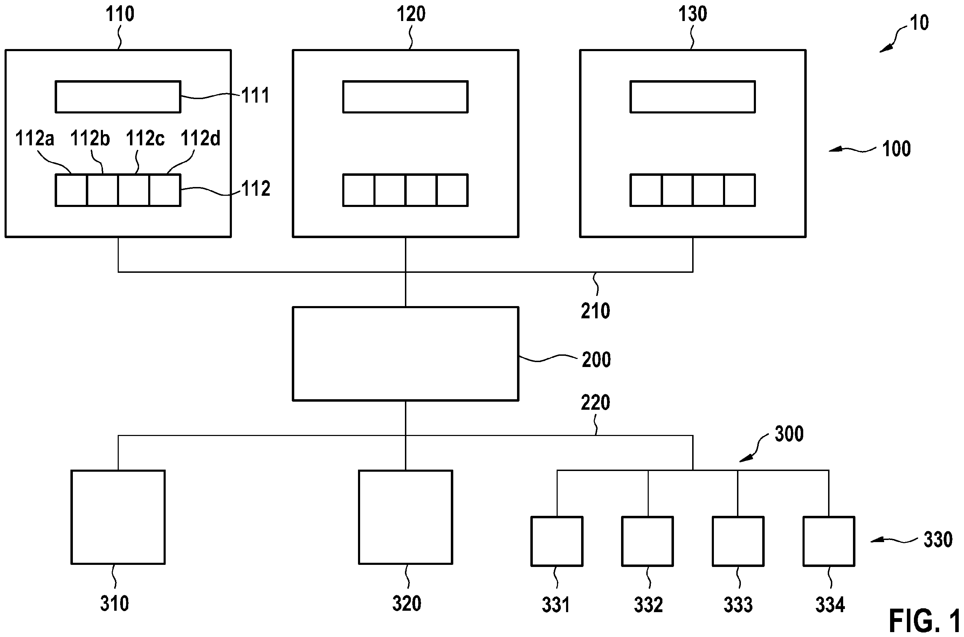

Kurze Beschreibung der Zeichnungen
- Figur 1: zeigt schematisch eine bevorzugte Ausgestaltung eines erfindungsgemäßen Steuergeräts für ein Kraftfahrzeug.

### Ausführungsform(en) der Erfindung

In Figur 1 ist eine bevorzugte Ausgestaltung eines erfindungsgemäßen Steuergeräts für ein Kraftfahrzeug schematisch dargestellt und mit 10 bezeichnet.

Das Steuergerät 10 umfasst dabei einen Multicore-Prozessor 100. Der Multicore-Prozessor 100 umfasst in diesem Beispiel drei Prozessorkerne 110, 120 und 130. Der Aufbau eines Prozessorkerns wird nachfolgend beispielhaft an dem Prozessorkern 110 erläutert. Die übrigen Prozessorkerne 120 und 130 sind dabei insbesondere analog zu Prozessorkern 110 ausgestaltet.

Der Prozessorkern 110 weist eine arithmetisch-logische Einheit (ALU) 111 und einen lokalen Speicher 112 auf. Der lokale Speicher 112 kann dabei insbesondere als ein lokaler Flash- oder RAM-Speicher ausgebildet sein. Insbesondere ist der lokale Speicher 112 in Speicherbänke 112a bis 112d unterteilt.

Das Steuergerät 10 weist weiterhin einen globalen Speicher 300 auf. Dieser globale Speicher kann einen Flash-Speicher 310, einen RAM-Speicher 320, als auch eine Peripherie 330 umfassen. Die Peripherie 300 umfasst dabei Peripheriemodule 331 bis 334, welche beispielsweise als Sensoren, Aktoren, Analog-Digital-Wandler, PWM-Generatoren oder Timer ausgebildet sein können. Jeder der Prozessorkerne 110, 120 und 130 kann ausschließlich auf seinen eigenen lokalen Speicher zugreifen und weder auf den lokalen Speicher eines anderen Prozessorkerns, noch auf den globalen Speicher 300. So kann beispielsweise der Prozessorkern 110 ausschließlich auf seinen eigenen lokalen Speicher 112 zugreifen und nur aus diesem Daten einlesen bzw. nur in diesen Daten schreiben. Der Prozessorkern 110 kann weder auf die lokalen Speicher der übrigen Prozessorkerne 120 und 130, noch auf den globalen Speicher 300 zugreifen.

Das Steuergerät 10 weist weiterhin eine Koordinationseinheit 200 auf. Diese Koordinationseinheit 200 ist insbesondere als ein separates Hardwareelement ausgebildet, auf welcher eine entsprechende Software abläuft. Die Koordinationseinheit 200 ist jeweils über einen Bus 210 bzw. 220 mit den Prozessorkernen 110, 120 und 130 des Multicore-Prozessors 100 und dem globalen Speicher 300 vernetzt.

Die Koordinationseinheit 200 weist die einzelnen Prozessorkerne 110, 120, 130 an, verschiedene Tasks auszuführen. Dabei liest die Koordinationseinheit 200 zunächst einen entsprechenden Programmcode aus dem Flash-Speicher 310 oder dem RAM-Speicher 320 des globalen Speichers 300 ein und schreibt diese Daten in den lokalen Speicher des Prozessorkerns, welcher den Task ausführen soll. In diesem Beispiel schreibt die Koordinationseinheit 200 den Programmcode in den lokalen Speicher 112 des Prozessorkerns 110.

Die Koordinationseinheit 200 schreibt den Programmcode dabei in bestimmte Speicherbänke des lokalen Speichers 112, beispielsweise in die Speicherbank 112a. Weiterhin liest die Koordinationseinheit 200 Eingangsdaten ein, welche der Prozessorkern 110 zum Ausführen des Tasks benötigt. Beispielsweise sind diese Eingangsdaten Messwerte, die ein Sensor 331 in der Peripherie 330 erfasst. Die Koordinationseinheit 200 liest diese Messwerte ein und speichert sie als Daten beispielsweise in die Speicherbank 112b des lokalen Speichers 112 des Prozessorkerns 110. Gegebenenfalls führt die Koordinationseinheit 200 dabei eine Konvertierung zwischen gelesenen und zu schreibenden Daten durch.

Die Koordinationseinheit 200 weist den Prozessorkern 110 daraufhin insbesondere mittels eines Interrupts an, den Task auszuführen. Die ALU 111 des Prozessorkerns 110 führt den in Speicherbank 112a gespeicherten Programmcode mittels der in Speicherbank 112b gespeicherten Eingangsdaten aus. Dabei werden Ausgabedaten erzeugt, welche der Prozessorkern 110 beispielsweise ebenfalls in der Speicherbank 112b speichert.

Die Koordinationseinheit 200 liest diese Ausgabedaten aus der Speicherbank 112b ein und speichert diese beispielsweise als Daten in dem Flash-Speicher 310 oder dem RAM-Speicher 320 des globalen Speichers 300.

## Patentansprüche

1. Steuergerät (10) für ein Kraftfahrzeug, wobei
- das Steuergerät (10) wenigstens zwei Prozessorkerne (110, 120, 130) und einen globalen Speicher (300) umfasst, wobei
- jeder Prozessorkern (110, 120, 130) jeweils einen lokalen Speicher (112) umfasst und wobei jeder Prozessorkern dazu eingerichtet ist, nur auf seinen eigenen lokalen Speicher zuzugreifen und dazu eingerichtet ist, weder auf die lokalen Speicher der übrigen Prozessorkerne noch auf den globalen Speicher (300) zuzugreifen, wobei das Steuergerät eine Koordinationseinheit umfasst, **dadurch gekennzeichnet, dass** die Koordinationseinheit (200) dazu eingerichtet ist,
- Daten gemäß eines der Koordinationseinheit (200) vorliegenden Ablaufplans, nach welchem die einzelnen Prozessorkerne bestimmte Tasks ausführen bzw. Prozesse abarbeiten, aus dem globalen Speicher (300) des Steuergeräts (10) einzulesen und in die lokalen Speicher (112) der einzelnen Prozessorkerne (110, 120, 130) zu schreiben und
- Daten gemäß des der Koordinationseinheit (200) vorliegenden Ablaufplans aus den lokalen Speichern (112) der einzelnen Prozessorkerne (110, 120, 130) einzulesen und in den globalen Speicher (300) und/oder in den lokalen Speicher der übrigen Prozessorkerne zu schreiben.

2. Steuergerät (10) nach Anspruch 1, wobei die Koordinationseinheit (200) dazu eingerichtet ist, das Lesen und Schreiben der Daten anwendungsspezifisch und/oder zeitgetrieben durchzuführen.

3. Steuergerät (10) nach Anspruch 1 oder 2, wobei die Koordinationseinheit (200) dazu eingerichtet ist, einen Programmcode eines auszuführenden Tasks und/oder Eingangsdaten, welche für einen auszuführenden Tasks benötigt werden, aus dem globalen Speicher (300) einzulesen und als Daten in den lokalen Speicher (112) der Prozessorkerne (110, 120, 130) zu schreiben.

4. Steuergerät (10) nach einem der vorstehenden Ansprüche, wobei die Koordinationseinheit (200) dazu eingerichtet ist, Ausgabedaten, die ein Prozessorkern (110) nach Ausführen eines Tasks in dessen lokalen Speicher (112) speichert, aus diesem lokalen Speicher (112) einzulesen und als Daten in den globalen Speicher (300) zu schreiben und/oder als Daten in den lokalen Speicher eines der übrigen Prozessorkerne (120, 130) zu schreiben.

5. Steuergerät (10) nach einem der vorstehenden Ansprüche, wobei die Koordinationseinheit (200) dazu eingerichtet ist, einzelnen Prozessorkernen (110, 120, 130) auszuführende Tasks zuzuweisen und/oder einzelne Prozessorkerne (110, 120, 130) anzuweisen, bestimmte Tasks auszuführen.

6. Steuergerät (10) nach einem der vorstehenden Ansprüche, wobei die Koordinationseinheit (200) dazu eingerichtet ist, mehrere Prozessorkerne (110, 120, 130) anzuweisen, einen bestimmten Task auszuführen und die einzelnen Ausgabedaten dieser Prozessorkerne (110, 120, 130) miteinander zu vergleichen und/oder wobei die Koordinationseinheit dazu eingerichtet ist, einen Prozessorkern anzuweisen, einen bestimmten Task mehrmals auszuführen und die einzelnen Ausgabedaten dieses mehrmaligen Ausführens durch diesen Prozessorkerns miteinander zu vergleichen.

7. Steuergerät (10) nach einem der vorstehenden Ansprüche, wobei die Koordinationseinheit (200) dazu eingerichtet ist, die einzelnen Prozessorkerne (110, 120, 130) anzusteuern und im Zuge dessen die einzelnen Prozessorkerne (110, 120, 130) zu unterbrechen, zurückzusetzen, außer Betrieb zu nehmen, zu testen, in einen Stromsparmodus zu versetzen, bei den einzelnen Prozessorkernen (110, 120, 130) einen Interrupt auszulösen und/oder eine Taktfrequenz der einzelnen Prozessorkerne (110, 120, 130) zu ändern.

8. Steuergerät (10) nach einem der vorstehenden Ansprüche, wobei die einzelnen lokalen Speicher (112) der Prozessorkerne (110, 120, 130) jeweils in unterschiedliche Speicherbänke (112a, 112b, 112c, 112d) unterteilt sind und wobei die Koordinationseinheit (200) dazu eingerichtet ist zu steuern, auf welche Speicherbänke (112a, 112b, 112c, 112d) der jeweilige Prozessorkern (110) zugreifen darf.

9. Steuergerät (10) nach einem der vorstehenden Ansprüche, wobei die Koordinationseinheit (200) als ein Teil eines Prozessorkerns ausgebildet ist oder als ein separates Hardwareelement ausgebildet ist.

## Claims

1. Controller (10) for a motor vehicle, wherein
- the controller (10) comprises at least two processor cores (110, 120, 130) and a global memory (300), wherein
- each processor core (110, 120, 130) comprises a respective local memory (112) and wherein each processor core is set up to access only its own local memory and is set up to access neither the local memories of the other processor cores nor the global memory (300), wherein the controller comprises a coordination unit, **characterized in that** the coordination unit (200) is set up
- to read in from the global memory (300) of the controller (10) data according to a schedule, available to the coordination unit (200), on the basis of which the individual processor cores perform particular tasks or execute processes and to write said data to the local memories (112) of the individual processor cores (110, 120, 130), and
- to read in from the local memories (112) of the individual processor cores (110, 120, 130) data according to the schedule available to the coordination unit (200) and to write said data to the global memory (300) and/or to the local memory of the other processor cores.

2. Controller (10) according to Claim 1, wherein the coordination unit (200) is set up to perform the reading and writing of the data in application-specific and/or time-driven fashion.

3. Controller (10) according to Claim 1 or 2, wherein the coordination unit (200) is set up to read in from the global memory (300) a program code for a task to be executed and/or input data needed for a task to be executed and to write said program code and/or input data to the local memory (112) of the processor cores (110, 120, 130) as data.

4. Controller (10) according to one of the preceding claims, wherein the coordination unit (200) is set up to read in from the local memory (112) of a processor core (110) output data that said processor core stores in said local memory (112) after performing a task and to write said output data to the global memory (300) as data and/or to write said output data to the local memory of one of the other processor cores (120, 130) as data.

5. Controller (10) according to one of the preceding claims, wherein the coordination unit (200) is set up to assign tasks to be performed to individual processor cores (110, 120, 130) and/or to instruct individual processor cores (110, 120, 130) to perform particular tasks.

6. Controller (10) according to one of the preceding claims, wherein the coordination unit (200) is set up to instruct two or more processor cores (110, 120, 130) to perform a particular task and to compare the individual output data of these processor cores (110, 120, 130) with one another and/or wherein the coordination unit is set up to instruct a processor core to perform a particular task repeatedly and to compare the individual output data of this repeated performance by this processor core with one another.

7. Controller (10) according to one of the preceding claims, wherein the coordination unit (200) is set up to actuate the individual processor cores (110, 120, 130) and, in the course of said actuation, to interrupt, reset, stop or test the individual processor cores (110, 120, 130) or put them into a power-saving mode, to trigger an interrupt to the individual processor cores (110, 120, 130) and/or to change a clock frequency of the individual processor cores (110, 120, 130).

8. Controller (10) according to one of the preceding claims, wherein the individual local memories (112) of the processor cores (110, 120, 130) are each divided into different memory banks (112a, 112b, 112c, 112d) and wherein the coordination unit (200) is set up to control which memory banks (112a, 112b, 112c, 112d) the respective processor core (110) is permitted to access.

9. Controller (10) according to one of the preceding claims, wherein the coordination unit (200) is configured as a part of a processor core or is configured as a separate hardware element.

## Revendications

1. Dispositif de commande (10) destiné à un véhicule automobile, dans lequel
- le dispositif de commande (10) comprend au moins deux coeurs de processeur (110, 120, 130) et une mémoire globale (300), dans lequel
- chaque coeur de processeur (110, 120, 130) comprend respectivement une mémoire locale (112) et dans lequel chaque coeur de processeur est adapté pour accéder seulement à sa propre mémoire locale et est adapté pour n'accéder ni aux mémoires locales des autres coeurs de processeur ni à la mémoire globale (300), dans lequel le dispositif de commande comprend une unité de coordination,
**caractérisé en ce que** l'unité de coordination (200) est adaptée
- pour lire des données depuis la mémoire globale (300) du dispositif de commande (10) conformément à un organigramme dont dispose l'unité de coordination (200), selon lequel les coeurs de processeur individuels exécutent des tâches ou exécutent des processus, et pour les écrire dans les mémoires locales (112) des coeurs de processeur individuels (110, 120, 130) et
- pour lire des données dans les mémoires locales (112) des coeurs de processeur individuels (110, 120, 130) conformément à l'organigramme dont dispose l'unité de coordination (200) et pour les écrire depuis la mémoire globale (300) et/ou dans les mémoires locales des autres coeurs de processeur.

2. Dispositif de commande (10) selon la revendication 1, dans lequel le dispositif de coordination (200) est adapté pour lire et écrire les données d'une manière spécifique à l'application et/ou en fonction du temps.

3. Dispositif de commande (10) selon la revendication 1 ou 2, dans lequel l'unité de coordination (200) est adaptée pour lire un code de programme d'une tâche à exécuter et/ou pour lire depuis la mémoire globale (300) des données d'entrée nécessaires pour une tâche à exécuter et pour les écrire en tant que données dans les mémoires locales (112) des coeurs de processeur (110, 120, 130).

4. Dispositif de commande (10) selon l'une des revendications précédentes, dans lequel l'unité de coordination (200) est adaptée pour lire depuis ladite mémoire locale (112) des données de sortie qu'un coeur de processeur (110) stocke dans sa mémoire locale (112) après avoir exécuté une tâche et pour les écrire en tant que données dans la mémoire globale (300) et/ou pour les écrire en tant que données dans la mémoire locale de l'un des autres coeurs de processeur (120, 130).

5. Dispositif de commande (10) selon l'une des revendications précédentes, dans lequel l'unité de coordination (200) est adaptée pour assigner des coeurs de processeur individuels (110, 120, 130) exécutant des tâches et/ou pour ordonner à des coeurs de processeur individuels (110, 120, 130) d'exécuter des tâches.

6. Dispositif de commande (10) selon l'une des revendications précédentes, dans lequel l'unité de coordination (200) est adaptée pour ordonner à une pluralité de coeurs de processeur (110, 120, 130) d'exécuter une tâche déterminée et de comparer entre elles les données de sortie individuelles desdits coeurs de processeur (110, 120, 130) et/ou dans lequel l'unité de coordination est adaptée pour ordonner à un coeur de processeur d'exécuter une tâche déterminée plusieurs fois et de comparer entre elles les données de sortie individuelles de ladite exécution multiple par ledit coeur de processeur.

7. Dispositif de commande (10) selon l'une des revendications précédentes, dans lequel l'unité de coordination (200) est adaptée pour commander les coeurs de processeur individuels (110, 120, 130) et pour interrompre, réinitialiser, mettre hors service, tester, mettre en mode d'économie d'énergie les coeurs de processeur individuels (110, 120, 130), déclencher une interruption dans les coeurs de processeur individuels (110, 120, 130) et/ou modifier une fréquence d'horloge des coeurs de processeur individuels (110, 120, 130).

8. Dispositif de commande (10) selon l'une des revendications précédentes, dans lequel les mémoires locales individuelles (112) des coeurs de processeur (110, 120, 130) sont respectivement divisées en différentes banques de mémoire (112a, 112b, 112c, 112d) et dans lequel le dispositif de coordination (200) est adapté pour commander les banques de mémoire (112a, 112b, 112c, 112d) auxquelles le coeur de processeur respectif (110) peut accéder.

9. Dispositif de commande (10) selon l'une des revendications précédentes, dans lequel l'unité de coordination (200) est réalisée en tant que partie d'un coeur de processeur ou en tant qu'élément matériel séparé.
